# EUROPEAN PATENT APPLICATION

(11) **EP 4 836 480 A1**
(43) Date of publication of application: **04.11.2026**
(21) Application number: 24909724.7
(22) Date of filing: 29.07.2024
(51) Int. Cl.: H04W 12/47

(54) **INTERNET OF THINGS BASE STATION, AND DATA CONFIGURATION METHOD FOR INTERNET OF THINGS BASE STATION**

(30) Priority: 26.12.2023 CN 202311815421
(71) Applicant: Hanshow Technology Co., Ltd., Jiaxing, Zhejiang 314031 (CN)
(72) Inventor: YU, Mingming, Jiaxing, Zhejiang 314031 (CN); GU, Hanchao, Jiaxing, Zhejiang 314031 (CN); ZHAO, Jianguo, Jiaxing, Zhejiang 314031 (CN); GAO, Bo, Jiaxing, Zhejiang 314031 (CN); LIANG, Min, Jiaxing, Zhejiang 314031 (CN)
(74) Representative: IP TRUST SERVICES
(86) International application number: PCT/CN2024/108098
(87) International publication number: WO 2025/138770

(57) **Abstract**

The present disclosure provides an IoT base station and a data configuration method for the same. The loT base station includes an electronic tag, a controller and a memory. The electronic tag is configured to, after establishing near-field communication with an intelligent terminal, receive encrypted configuration data corresponding to the IoT base station and provided by the intelligent terminal to the IoT base station. The controller is configured to read the encrypted configuration data received by the electronic tag, and decrypt the encrypted configuration data with a private key of the IoT base station; if decryption is successful, read a session identifier value in the decrypted configuration data; and if the session identifier value in the decrypted configuration data is greater than a session identifier value stored in the memory and a difference therebetween is equal to a preset value, write the decrypted configuration data into the memory. The memory is configured to store the session identifier value and the decrypted configuration data.

## Description

### RELATED APPLICATION

The present disclosure claims priority to Chinese Patent Application NO. 202311815421.5 filed on December 26, 2023, which is hereby incorporated by reference in its entirety.

### TECHNICAL FIELD

The present disclosure relates to the technical field of the Internet of Things (IoT), and particularly to an IoT base station and a data configuration method for the IoT base station.

### BACKGROUND

This section is intended to provide background or context for the embodiments of the present disclosure set forth in the claims. The description herein is not admitted to be the prior art merely by virtue of its inclusion in this section.

Before installing an IoT base station in a user's environment, it is necessary to preconfigure data such as network settings and background server addresses. Conventional data configuration methods include, for example, powering on a plurality of IoT base stations one by one, establishing connections with the management interface of each IoT base station, and enabling configuration personnel to individually configure data for respective IoT base stations. Accordingly, on-site operations require configuration personnel to have certain technical capabilities and a stable operation space for placing computers, network cables and base station power supplies. In practice, the actual environment is complicated. Particularly before store opening, a large number of shelves, commodities, equipment and pending waste, together with unstable power supply, make it difficult to configure the IoT base station on-site, which results in low efficiency of data configuration. In addition, direct on-site configuration performed by configuration personnel leads to low security of data configuration.

### SUMMARY

Embodiments of the present disclosure provide an Internet of Things (IoT) base station, which eliminates the need for configuration personnel to possess relevant technical capabilities during data configuration, thereby lowering the threshold for data configuration, and improving the efficiency and security thereof. Meanwhile, the validity of configuration data can be verified by comparing session identifier values to avoid erroneous configuration. The IoT base station includes:
an electronic tag, a controller and a memory;
the electronic tag is configured to, after establishing near-field communication with an intelligent terminal, receive encrypted configuration data corresponding to the IoT base station and provided by the intelligent terminal to the IoT base station; and the encrypted configuration data is obtained by the intelligent terminal encrypting configuration data with a public key of the IoT base station, and the configuration data is pre-stored in a background server of the intelligent terminal;
the controller is configured to read the encrypted configuration data received by the electronic tag, and decrypt the encrypted configuration data with a private key of the IoT base station; if decryption is successful, read a session identifier value in the decrypted configuration data; and if the session identifier value in the decrypted configuration data is greater than a session identifier value stored in the memory and a difference between the session identifier value in the decrypted configuration data and the session identifier value stored in the memory is equal to a preset value, write the decrypted configuration data into the memory; and
the memory is configured to store the session identifier value and the decrypted configuration data.

The embodiments of the present disclosure provide a data configuration method for an IoT base station, which eliminates the need for configuration personnel to possess relevant technical capabilities, thereby lowering the threshold for data configuration, and improving the efficiency and security thereof. Meanwhile, the validity of configuration data can be verified by comparing session identifier values to avoid erroneous configuration. The method includes:
receiving, by an electronic tag of the IoT base station after the electronic tag establishes near-field communication with an intelligent terminal, encrypted configuration data corresponding to the IoT base station and provided by the intelligent terminal to the IoT base station; and the encrypted configuration data is obtained by the intelligent terminal encrypting configuration data with a public key of the IoT base station, and the configuration data is pre-stored in a background server of the intelligent terminal; and
reading, by a controller of the IoT base station, the encrypted configuration data received by the electronic tag, and decrypting the encrypted configuration data with a private key of the IoT base station; reading, by the controller if decryption is successful, a session identifier value in the decrypted configuration data; and writing, by the controller if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

The embodiments of the present disclosure provide a configuration data processing method, which is applied to the controller of the IoT base station, including:
reading, after establishing near-field communication between an electronic tag and an intelligent terminal, encrypted configuration data corresponding to the IoT base station, which is provided by the intelligent terminal to the IoT base station and received via the electronic tag, and the encrypted configuration data is obtained by the intelligent terminal encrypting configuration data with a public key of the IoT base station, and the configuration data is pre-stored in a background server of the intelligent terminal;
decrypting the encrypted configuration data with a private key of the IoT base station; reading, if decryption is successful, a session identifier value in the decrypted configuration data; and
writing, if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

The embodiments of the present disclosure provide a configuration data processing apparatus, which is applied to the controller of the IoT base station, including:
a configuration data reading module configured to read, after near-field communication is established between an electronic tag and an intelligent terminal, encrypted configuration data corresponding to the IoT base station, which is provided by the intelligent terminal to the IoT base station and received by the electronic tag; wherein the encrypted configuration data is obtained by the intelligent terminal encrypting configuration data with a public key of the IoT base station, and the configuration data is pre-stored in a background server of the intelligent terminal;
a configuration data decryption module configured to decrypt the encrypted configuration data with a private key of the IoT base station and, read, if decryption is successful, a session identifier value in the decrypted configuration data; and
a configuration data writing module configured to write, if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

The embodiments of the present disclosure provide a computer device, including a memory, a processor, and a computer program stored in the memory and executable on the processor, and when executing the computer program, the processor implements the configuration data processing method.

The embodiments of the present disclosure provide a computer-readable storage medium, and the computer-readable storage medium stores a computer program which, when executed by a processor, implements the configuration data processing method.

The embodiments of the present disclosure provide a computer program product, and the computer program product includes a computer program which, when executed by a processor, implements the configuration data processing method.

The IoT base station and the data configuration method for the IoT base station according to the embodiments of the present disclosure solve the problems of low efficiency of data configuration and poor security thereof caused by on-site direct configuration performed by configuration personnel. The embodiments of the present disclosure include an electronic tag, a controller and a memory. The electronic tag is configured to, after establishing near-field communication with an intelligent terminal, receive encrypted configuration data corresponding to the IoT base station and provided by the intelligent terminal to the IoT base station; the encrypted configuration data is obtained by the intelligent terminal encrypting configuration data with a public key of the IoT base station, and the configuration data is pre-stored in a background server of the intelligent terminal. The controller is configured to read the encrypted configuration data received by the electronic tag, and decrypt the encrypted configuration data with a private key of the IoT base station; if decryption is successful, the controller reads a session identifier value in the decrypted configuration data; if the session identifier value in the decrypted configuration data is greater than a session identifier value stored in the memory and a difference between the session identifier value in the decrypted configuration data and the session identifier value stored in the memory is equal to a preset value, the controller writes the decrypted configuration data into the memory. The memory is configured to store the session identifier value and the decrypted configuration data. In the embodiments of the present disclosure, the electronic tag establishes near-field communication with the intelligent terminal, and configuration data is pre-stored in the background server of the intelligent terminal. The configuration personnel are not required to possess relevant technical capabilities, which lowers the threshold for configuration data and improves efficiency thereof. The encrypted transmission of the configuration data enhances the security of the configuration data, and the validity of configuration data can be verified by comparing the session identifier values to avoid erroneous configuration.

### BRIEF DESCRIPTION OF DRAWINGS

In order to more clearly illustrate the technical solutions in the embodiments of the present disclosure, the drawings to be used in the description of the embodiments will be briefly introduced below. Obviously, the drawings involved in the following description only illustrate some embodiments of the present disclosure, and other drawings can be obtained by those of ordinary skill in the art according to these drawings without paying any inventive effort.
FIG. 1 illustrates an Internet of Things (IoT) base station according to an embodiment of the present disclosure;
FIG. 2 illustrates a format structure diagram of electronic tag data exchange information according to an embodiment of the present disclosure;
FIG. 3 illustrates a flowchart of a data configuration method for an IoT base station according to an embodiment of the present disclosure;
FIG. 4 illustrates a specific example diagram of a data configuration method for an IoT base station according to an embodiment of the present disclosure;
FIG. 5 illustrates a specific example diagram of a data configuration method for an IoT base station according to another embodiment of the present disclosure;
FIG. 6 illustrates a specific example diagram of a data configuration method for an IoT base station according to another embodiment of the present disclosure;
FIG. 7 illustrates a specific example diagram of a data configuration method for an IoT base station according to another embodiment of the present disclosure;
FIG. 8 illustrates a specific example diagram of a data configuration method for an IoT base station according to another embodiment of the present disclosure;
FIG. 9 illustrates a specific example diagram of a data configuration method for an IoT base station according to another embodiment of the present disclosure;
FIG. 10 illustrates a flowchart of a configuration data processing method according to an embodiment of the present disclosure;
FIG. 11 illustrates a schematic diagram of a configuration data processing apparatus according to an embodiment of the present disclosure; and
FIG. 12 illustrates a schematic diagram of a computer device according to an embodiment of the present disclosure.

### DESCRIPTION OF EMBODIMENTS

In order that the objectives, technical solutions and advantages of the embodiments of the present disclosure are clearer, the embodiments of the present disclosure will be further described in detail with reference to the drawings. Herein, the exemplary embodiments of present disclosure and the descriptions thereof are used to explain the present disclosure, but should not be deemed as limitations thereto.

The term "and/or" used herein merely describes an associative relationship and there may be three possible relationships. For example, "A and/or B" covers three scenarios: A alone, both A and B, and B alone. In addition, the term "at least one" herein refers to one of a plurality of items or any combination thereof. By way of example, "including at least one of A, B or C" means including any one or more of A, B and C.

In the description of the present disclosure, terms such as "comprise", "include", "have" and "contain" are all open-ended expressions, meaning including but not limited to the listed items. References to "an embodiment", "a specific embodiment", "some embodiments", "for example" and the like indicate that specific features, structures or characteristics described in conjunction with such embodiment(s) or example(s) are incorporated into at least one embodiment or example of the present disclosure. In the present disclosure, illustrative recitations of the above terms do not necessarily refer to the same embodiment or example. Moreover, the specific features, structures or characteristics as described may be appropriately combined in any one or more embodiments or examples. The sequence of steps set forth in each embodiment is intended to exemplarily describe the implementation of the present disclosure. Such sequence of steps is not limited and may be appropriately adjusted as needed.

The principles and spirit of the present disclosure will be illustrated in detail below with reference to a plurality of representative embodiments thereof.

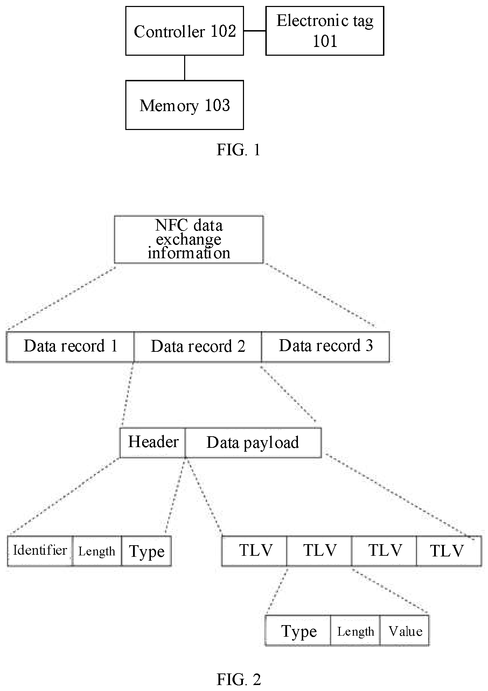

FIG. 1 illustrates an Internet of Things (IoT) base station according to an embodiment of the present disclosure.

In an embodiment of the present disclosure, with reference to FIG. 1, an IoT base station includes:
an electronic tag (for example, a Near Field Communication (NFC) Tag) 101, a controller (Central Processing Unit (CPU)) 102, and a memory 103;
the electronic tag 101 is configured to, after establishing near-field communication with an intelligent terminal (Personal Digital Assistant (PDA)), receive encrypted configuration data corresponding to the IoT base station and provided by the intelligent terminal to the IoT base station; the encrypted configuration data is obtained by the intelligent terminal encrypting configuration data with a public key of the IoT base station, and the configuration data is pre-stored in a background server of the intelligent terminal;
the controller 102 is configured to read the encrypted configuration data received by the electronic tag 101, and decrypt the encrypted configuration data with a private key of the IoT base station; if decryption is successful, read a session identifier value in the decrypted configuration data; and if the session identifier value in the decrypted configuration data is greater than a session identifier value stored in the memory and a difference between the session identifier value in the decrypted configuration data and the session identifier value stored in the memory is equal to a preset value, write the decrypted configuration data into the memory 103; and
the memory 103 is configured to store the session identifier value and the decrypted configuration data.

With reference to FIG. 1, the embodiment of the present disclosure includes an electronic tag, a controller and a memory. The electronic tag is configured to, after establishing near-field communication with an intelligent terminal, receive encrypted configuration data corresponding to the IoT base station and provided by the intelligent terminal to the IoT base station; the encrypted configuration data is obtained by the intelligent terminal encrypting configuration data with a public key of the IoT base station, and the configuration data is pre-stored in a background server of the intelligent terminal. The controller is configured to read the encrypted configuration data received by the electronic tag, and decrypt the encrypted configuration data with a private key of the IoT base station; if decryption is successful, the controller reads a session identifier value in the decrypted configuration data; if the session identifier value in the decrypted configuration data is greater than a session identifier value stored in the memory and a difference between the session identifier value in the decrypted configuration data and the session identifier value stored in the memory is equal to a preset value, the controller writes the decrypted configuration data into the memory. The memory is configured to store the session identifier value and the decrypted configuration data. In the embodiment of the present disclosure, the electronic tag establishes near-field communication with the intelligent terminal, and configuration data is pre-stored in the background server of the intelligent terminal. The configuration personnel are not required to possess relevant technical capabilities, which lowers the threshold for data configuration and improves the efficiency thereof. The encrypted transmission of the configuration data enhances the security of the configuration data, and the validity of the configuration data can be verified by comparing the session identifier values to avoid erroneous configuration.

During implementation, the IoT base station (hereinafter referred to as the base station) supports contactless access channels in addition to network and serial communication. When a PDA device approaches the base station, configuration software reads base station information stored in a public area of the electronic tag of the base station via NFC. If the base station information is valid, configuration data associated with the base station and stored in the background server of the PDA device is written into an NFC Tag area. After the IoT base station is powered on and started up, the CPU reads data from an NFC Tag, and if an update to the configuration data is required, the CPU writes the configuration data into a storage device. After the configuration data is stored in the local storage device, data in the NFC tag area is updated, including modification of status and deletion of configuration write instructions.

During implementation of the present disclosure, Information Technology (IT) staff or pre-sales technical personnel need to pre-input the configuration data of the IoT base station into the background server. During data configuration, operation personnel only need to make the PDA device approach the base station, and the configuration data can be synchronized even when the IoT base station is unpowered, which greatly reduces the technical requirements for the on-site construction environment and operation personnel.

In an embodiment of the present disclosure, the electronic tag is further configured to:
send an IoT base station identifier to the intelligent terminal; and the IoT base station identifier is used to enable the intelligent terminal to determine the IoT base station requiring the configuration data. Specifically, after activating the electronic tag, the intelligent terminal sends a command for reading the IoT base station identifier to the electronic tag, and the electronic tag send the IoT base station identifier to the intelligent terminal.

In an embodiment of the present disclosure, the controller is specifically configured to:
if the session identifier value in the decrypted configuration data is greater than the session identifier value stored in the memory and the difference between the session identifier value in the decrypted configuration data and the session identifier value stored in the memory is equal to the preset value, upon detecting a write configuration data instruction in the decrypted configuration data, write the decrypted configuration data into the memory, update the session identifier value stored in the memory to the session identifier value in the decrypted configuration data, and send a session identifier value update message to the background server of the intelligent terminal, and the session identifier value update message notifies the background server to carry the updated session identifier value for subsequent data configuration.

In an embodiment of the present disclosure, the controller is further configured to:
if decryption fails, send an IoT base station status identifier indicating decryption failure to the electronic tag;
if the session identifier value in the decrypted configuration data is less than or equal to the session identifier value stored in the memory or the difference between the session identifier value in the decrypted configuration data and the session identifier value stored in the memory is not equal to the preset value, refuse to write the decrypted configuration data into the memory and send an IoT base station status identifier indicating abnormal session to the electronic tag.

The electronic tag is further configured to send the IoT base station status identifier indicating decryption failure or the IoT base station status identifier indicating abnormal session to the intelligent terminal. Specifically, after activating the electronic tag, the intelligent terminal sends a command for reading the IoT base station status identifier to the electronic tag, and the electronic tag sends the IoT base station status identifier to the intelligent terminal.

In an embodiment of the present disclosure, the controller is further configured to:
after writing the decrypted configuration data into the memory, send an IoT base station status identifier indicating successful configuration to the electronic tag.

The electronic tag is further configured to send the IoT base station status identifier indicating successful configuration to the intelligent terminal.

In an embodiment of the present disclosure, the controller is further configured to:
if decryption fails, screen out a corresponding decryption failure processing strategy from the memory according to the IoT base station status identifier indicating decryption failure, and send the IoT base station status identifier indicating decryption failure and the corresponding decryption failure processing strategy to the electronic tag, and the decryption failure processing strategy is used to assist configuration personnel in rapidly resolving decryption failures;
if the session identifier value in the decrypted configuration data is less than or equal to the session identifier stored in the memory or the difference between the session identifier value in the decrypted configuration data and the session identifier value stored in the memory is not equal to the preset value, refuse to write the decrypted configuration data into the memory, screen out a corresponding abnormal session processing strategy from the memory according to the IoT base station status identifier indicating abnormal session, and send the IoT base station status identifier indicating abnormal session and the corresponding abnormal session processing strategy to the electronic tag, wherein the abnormal session processing strategy is used to assist configuration personnel in rapidly resolving abnormal-session issues.

The electronic tag is further configured to send the IoT base station status identifier indicating decryption failure and the corresponding decryption failure processing strategy to the intelligent terminal, or send the IoT base station status identifier indicating abnormal session and the corresponding abnormal session processing strategy to the intelligent terminal.

The memory is further configured to store the decryption failure processing strategy corresponding to the IoT base station status identifier indicating decryption failure and the abnormal session processing strategy corresponding to the IoT base station status identifier indicating abnormal session.

During implementation, the memory stores the decryption failure processing strategy corresponding to the IoT base station status identifier indicating decryption failure and the abnormal session processing strategy corresponding to the IoT base station status identifier indicating abnormal session, so that the corresponding processing strategy can be selected from the memory according to the IoT base station status identifier indicating decryption failure or the IoT base station status identifier indicating abnormal session. In addition, it should be noted that the decryption failure processing strategy corresponding to the IoT base station status identifier indicating decryption failure and the abnormal session processing strategy corresponding to the IoT base station status identifier indicating abnormal session may also be stored in the background server of the intelligent terminal. After the electronic tag sends the IoT base station status identifier indicating decryption failure or the IoT base station status identifier indicating abnormal session to the intelligent terminal, the intelligent terminal selects the corresponding processing strategy from the background server according to the IoT base station status identifier. To be further noted, if it is determined that the corresponding processing strategy needs to be executed by the IoT base station, the intelligent terminal can send the corresponding processing strategy to the electronic tag, such that the base station obtains the strategy indirectly from the electronic tag for subsequent processing.

In an embodiment of the present disclosure, when the decrypted configuration data cannot be written into the memory or the configuration data currently stored in the memory is unavailable, the IoT base station may be restored to factory defaults. Specifically, the memory invokes factory configuration data for use, and the memory is capable of storing the factory configuration data.

FIG. 2 illustrates a format structure diagram of electronic tag data exchange information according to an embodiment of the present disclosure.

In an embodiment of the present disclosure, with reference to FIG. 2, the data stored in the electronic tag (NFC Tag) is based on an NFC Data Exchange Format (NDEF). An NDEF Message includes a plurality of records each composed of a header and a payload. The header includes an Identifier, a Length and a Type. The payload is composed of a plurality of Type-Length-Value (TLV) structures each including a Type, a Length and a Value. Specifically, the field format of the header is shown in Table 1.

**Table 1: Field Format of Header**

| Field | Length | Description | Value |
|---|---|---|---|
| MB | 1b | Indicating whether it is the start of an NDEF message | 1 |
| ME | 1b | Indicating whether it is the final record in | 1 |
| | | the message | |
| CF | 1b | Indicating whether it is a first record chunk or an intermediate record chunk | 0 |
| SR | 1b | SR is set to 1 if PAYLOAD LENGTH field occupies one byte (8 bits/ ranging from 0 to 255) or less, which enables a more compact record | 0 |
| IL | 1b | IL indicates whether an ID Length field is present, and if IL is set to 0, the ID Length field is omitted in the record | 0 |
| TNF | 3b | Specifying the type of record | 1 |
| TYPE LENGTH | 1b | Length of record header | 1 |
| PAYLOAD LENGTH | 4b | Length of payload | Length of payload, big-endian format |
| RECORD TYPE | 1b | Type of record | 54 |
| IANA | 1b | Length of language code | 2 |
| CODE | 2b | Encoding format | 65 6E |
| PAYLOAD | N Bytes | Data content | Encrypted data |

The fields of the TLV of the payload are defined in Table 2.

**Table 2: Field Definitions of TLV Structure in Payload**

| Field | Length | Description | Value |
|---|---|---|---|
| Type | 1b | 1: Identifier code of IoT base station | |
| | | 2: Session ID | |
| | | 10: Updated server address | |
| | | 11: Updated NTP address | |
| | | 12: Updated time zone setting | |
| | | 50: Current server address | |
| | | 51: Current Network Time Protocol (NTP) address | |
| | | 52: Current time zone configuration | |
| | | 53: Current IP address | |
| | | 80: Base station exception log | |
| Length | 2b | Length of Value field, excluding itself; big-endian format | |
| Value | N Bytes | See Table 3 for data format | Encrypted data |

The Value field is defined as in Table 3.

**Table 3: Definition of Value Field**

| Type value | Description | Example Value |
|---|---|---|
| 1 | Identifier of IoT base station | CA:81:F0:D4:D0:AD |
| 2 | Session ID | 2 |
| 10 | Updated server address | 192.168.4.1 |
| 11 | Updated Network Time Protocol (NTP) address | 192.168.5.1 |
| 12 | Updated time zone setting | ASIA/Shanghai |
| 50 | Current server address | 192.168.4.2 |
| 51 | Current NTP address | 192.168.5.2 |
| 52 | Current time zone configuration | ASIA/Shanghai |
| 53 | Current IP address | 192.168.10.56 |
| 80 | Base station status code | 1112: Configuration update succeeded |
| | | 1113: Configuration decryption failed |
| | | 1114: Session ID Error |

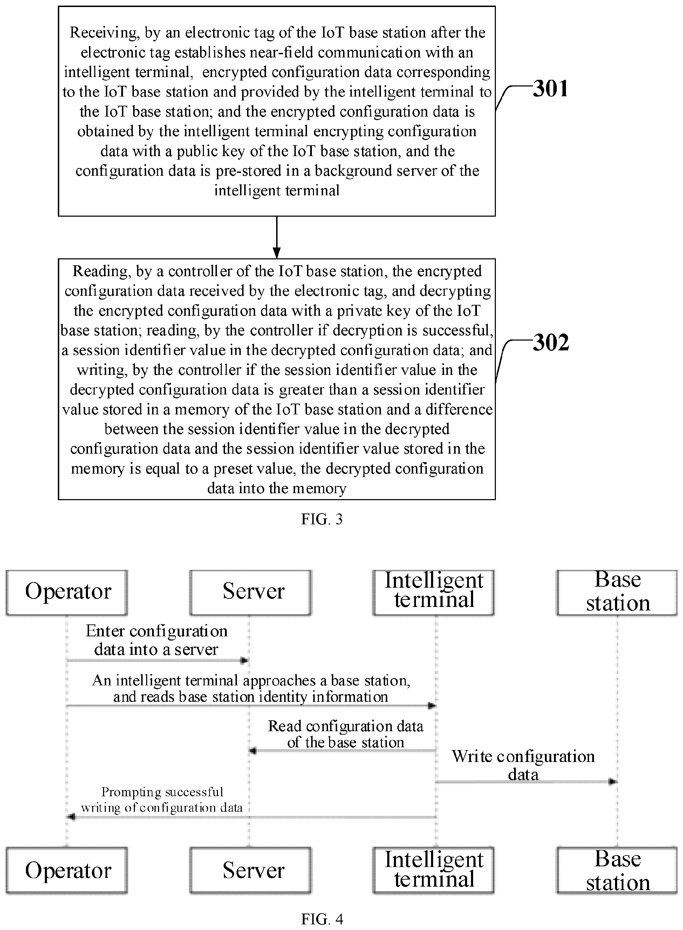

FIG. 3 illustrates a flowchart of a data configuration method for an IoT base station according to an embodiment of the present disclosure.

An embodiment of the present disclosure provides a data configuration method for an IoT base station, which includes the following steps with reference to FIG. 3:
Step 301: receiving, by an electronic tag of the IoT base station after the electronic tag establishes near-field communication with an intelligent terminal, encrypted configuration data corresponding to the IoT base station and provided by the intelligent terminal to the IoT base station; and the encrypted configuration data is obtained by the intelligent terminal encrypting configuration data with a public key of the IoT base station, and the configuration data is pre-stored in a background server of the intelligent terminal; and
Step 302: reading, by a controller of the IoT base station, the encrypted configuration data received by the electronic tag, and decrypting the encrypted configuration data with a private key of the IoT base station; reading, by the controller if decryption is successful, a session identifier value in the decrypted configuration data; and writing, by the controller if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

FIG. 4 illustrates a specific example diagram of a data configuration method for an IoT base station according to an embodiment of the present disclosure.

In an embodiment of the present disclosure, with reference to FIG. 4, configuration personnel (operators) firstly input configuration data into a background server; an intelligent terminal (PDA) approaches an base station to read base station identity information which is stored in an electronic tag thereof; after reading the configuration data of the base station from the background server, the intelligent terminal writes the configuration data into the IoT base station and prompts the configuration personnel of successful writing of the configuration data.

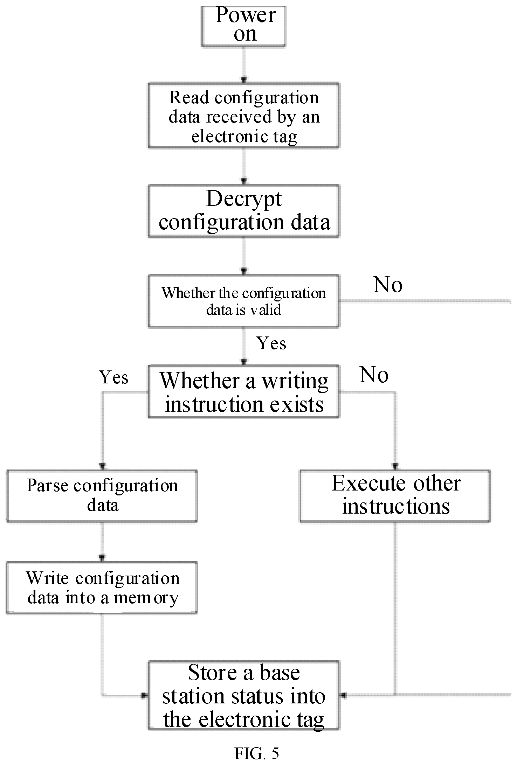

FIG. 5 illustrates a specific example diagram of a data configuration method for an IoT base station according to another embodiment of the present disclosure.

In an embodiment of the present disclosure, with reference to FIG. 5, after an IoT base station is powered on, a controller (CPU) reads encrypted configuration data received by an electronic tag (NFC Tag), and decrypts the encrypted configuration data. If a session identifier value in the decrypted configuration data is less than or equal to a session identifier value stored in a memory of the IoT base station, the configuration data is invalid, and an IoT base station status identifier indicating abnormal session is sent to the electronic tag. If the session identifier value in the encrypted configuration data is greater than the session identifier value stored in the memory of the IoT base station and a difference between the session identifier value in the decrypted configuration data and the session identifier value stored in the memory is equal to a preset value, it is detected whether a command for writing the configuration data is present in the decrypted configuration data; if not, the configuration data cannot be decrypted, and an IoT base station status identifier indicating decryption failure is sent to the electronic tag; and if so, the configuration data is written into the memory, and an IoT base station status identifier indicating successful configuration is sent to the electronic tag.

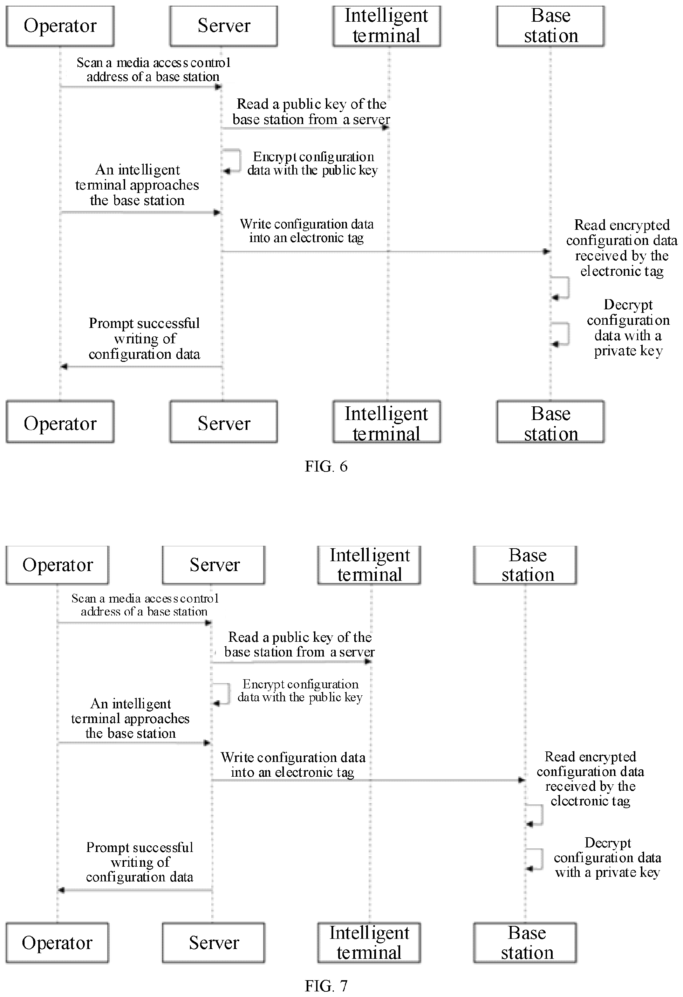

FIG. 6 illustrates a specific example diagram of a data configuration method for an IoT base station according to another embodiment of the present disclosure.

During implementation, an asymmetric encryption algorithm is adopted for configuration data stored in an electronic tag (NFC Tag) to ensure the security thereof, and the relevant processing procedure is described with reference to FIG. 6. Configuration personnel scan a Media Access Control Address (MAC) of an IoT base station to determine an IoT base station identifier; read a public key of the IoT base station from a background server via an intelligent terminal (PDA); encrypt the configuration data with the public key at the intelligent terminal; and write the encrypted configuration data into the electronic tag (NFC Tag). A controller (CPU) of the IoT base station reads the encrypted configuration data received by the electronic tag, and decrypts the configuration data with a corresponding private key, then stores the decrypted configuration data into a memory of the IoT base station. The controller sends an IoT base station status identifier indicating successful configuration to the electronic tag, and the electronic tag sends the IoT base station status identifier indicating successful configuration to the intelligent terminal.

During implementation, the configuration data exchanged between the PDA and the IoT base station via NFC is encrypted at an application layer. When the public key of the IoT base station is used for data encryption, a new session ID is appended to the configuration data. The content of the to-be-encrypted configuration data stream is shown in Table 4. The PDA encrypts the configuration data listed in Table 4 with the public key of the IoT base station and writes the encrypted configuration data into the memory of the IoT base station via NFC.

**Table 4: Content of to-be-encrypted configuration data stream**

| Field | Length | Description |
|---|---|---|
| len | 4 bytes | Length of original content in little-endian format |
| sid | 32 bytes | Session ID; a new Session ID shall be adopted for each new communication |
| data | n bytes | Original content, whose length is determined by the preceding len field |

When an unauthorized device reads base station information via NFC, the configuration data cannot be identified even if illegally read, because the configuration data is encrypted with the private key of the corresponding base station, and each base station is equipped with an exclusive set of keys. When the unauthorized device attempts to write configuration data, the content stored in an NFC public area of the base station may be corrupted. Nevertheless, the public key of the base station cannot be obtained for data encryption in this case, and the illegally written configuration data will not affect the normal operation of the base station. When the base station obtains valid configuration data from NFC, such configuration data is stored inside the base station. When the configuration data in the NFC public area of the base station is illegally corrupted, the base station uses the configuration data stored in the memory.

In an embodiment of the present disclosure, after near-field communication is established between the electronic tag and the intelligent terminal, the method further includes:
sending, by the electronic tag, an IoT base station identifier to the intelligent terminal, and the IoT base station identifier is used to enable the intelligent terminal to determine the base station requiring the configuration data.

During implementation, when the IoT base station is damaged and fails to power up, and a label affixed to its housing is damaged and unrecognizable, the base station identity information stored in the (NFC) public area of the electronic tag of the IoT base station can be read to resolve the failure in identifying the IoT base station under such circumstances.

In an embodiment of the present disclosure, in order to prevent a third party from intercepting data packets to launch replay attacks, the session identifier value (session ID) must be incremented when the configuration data is updated, so as to ensure that the encrypted configuration data is unique upon each update of the configuration data. If the session identifier value (session ID) in the encrypted configuration data is greater than the session identifier value stored in the memory of the IoT base station and the difference between the session identifier value in the decrypted configuration data and the session identifier value stored in the memory is equal to the preset value, upon detecting a write configuration data instruction in the decrypted configuration data, the controller writes the decrypted configuration data into the memory, updates the session identifier value stored in the memory to the session identifier value in the encrypted configuration data, and sends a session identifier value update message to the background server of the intelligent terminal, and the session identifier value update message notifies the background server to carry the updated session identifier value for subsequent data configuration.

In an embodiment of the present disclosure, the step where if decryption is successful, the controller reads the session identifier value in the decrypted configuration data further includes:
if decryption fails, the controller sends an IoT base station status identifier indicating decryption failure to the electronic tag, and the electronic tag sends the IoT base station status identifier indicating decryption failure to the intelligent terminal.

The step where writing, by the controller if the session identifier value in the decrypted configuration data is greater than the session identifier value stored in the memory of the IoT base station and the difference between the session identifier value in the decrypted configuration data and the session identifier value stored in the memory is equal to the preset value, the decrypted configuration data into the memory further includes:
refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory and sending an IoT base station status identifier indicating abnormal session to the electronic tag, and sending, by the electronic tag, the IoT base station status identifier indicating abnormal session to the intelligent terminal. Specifically, when the session ID is less than or equal to that stored in the memory, the corresponding configuration data is deemed expired, and subsequent configuration data update operations will not be performed.

In an embodiment of the present disclosure, after the controller writes the decrypted configuration data into the memory, the method further includes:
sending, by the controller, an IoT base station status identifier indicating successful configuration to the electronic tag; and
sending, by the electronic tag, the IoT base station status identifier indicating successful configuration to the intelligent terminal.

FIG. 7 illustrates a specific example diagram of a data configuration method for an IoT base station according to another embodiment of the present disclosure.

During implementation, with reference to FIG. 7, configuration personnel read new configuration data, apply for a session identifier (session ID) for the current configuration from a background server via an intelligent terminal, and encrypt the configuration data with a public key by using the obtained new session ID. The intelligent terminal writes the encrypted configuration data into an electronic tag (NFC Tag) through NFC near-field communication. A controller of an IoT base station reads the configuration data from the electronic tag (NFC Tag) and decrypts the configuration data with a private key to obtain the session ID, then verifies validity thereof. When the session ID in the decrypted configuration data is greater than the session ID stored in the memory of the IoT base station, the controller writes the decrypted configuration data into the memory, and sends an IoT base station status identifier indicating successful configuration to the electronic tag. The intelligent terminal reads the IoT base station status identifier indicating successful configuration from the electronic tag, and prompts the configuration personnel of successful configuration of the configuration data.

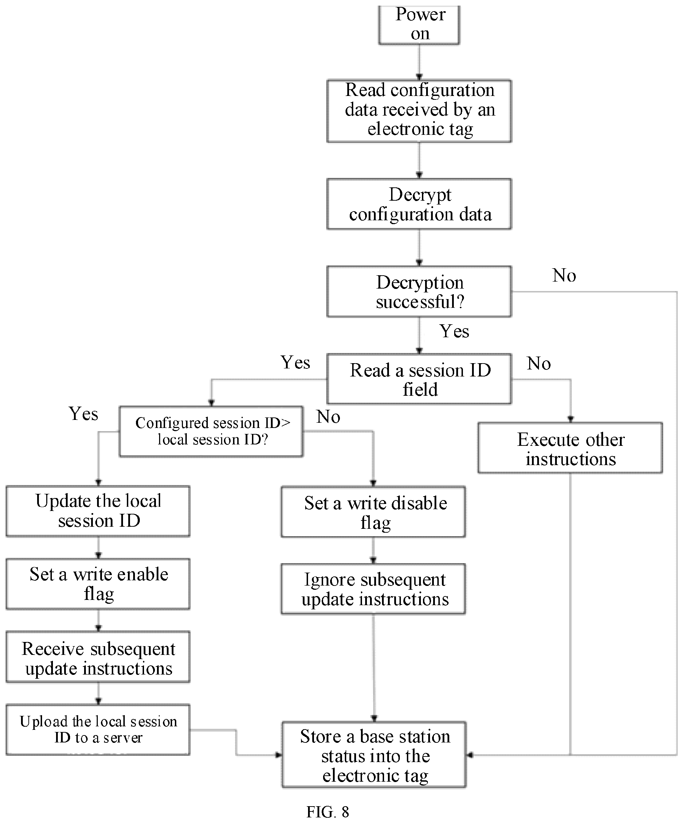

FIG. 8 illustrates a specific example diagram of a data configuration method for an IoT base station according to another embodiment of the present disclosure.

During implementation, with reference to FIG. 8, after the IoT base station is powered on, a controller (CPU) reads encrypted configuration data received by an electronic tag (NFC Tag) and decrypts the configuration data. If decryption fails, the controller sends an IoT base station status identifier indicating decryption failure to the electronic tag (NFC Tag). If decryption is successful, the controller reads a session ID from the decrypted configuration data, and if the session ID cannot be read, the controller executes other command and stores the corresponding IoT base station status identifier into the electronic tag. When the session ID is read from the configuration data and greater than a local session ID, the controller updates the local session ID to session ID in the decrypted configuration data, sets a write-enable flag, writes the configuration data into the memory, waits for a subsequent command, sends the updated local session ID to a background server, and stores an IoT base station status identifier indicating successful configuration into the electronic tag. If the session ID in the configuration data is less than or equal to the local session ID, the controller sets a write-disable flag, skips the subsequent update command and stores the corresponding IoT base station status identifier into the electronic tag. It should be noted that when the IoT base station is reset or failed in connection with the server, the controller attempts to adopt a server address value stored in an NFC Tag area, and operations in this case are not restricted by the session ID.

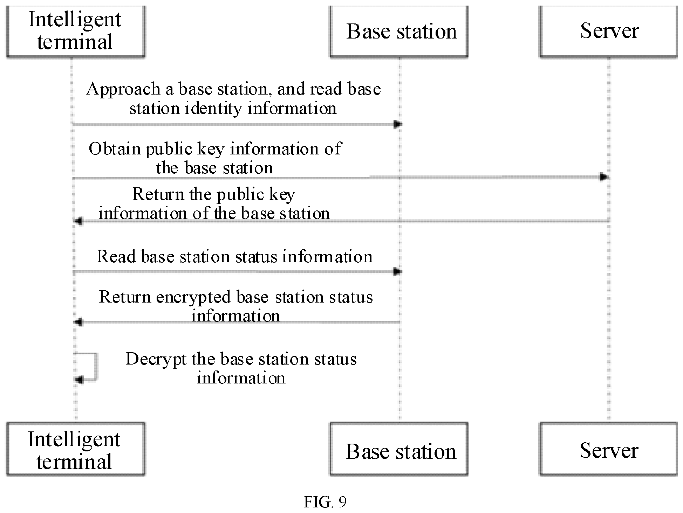

FIG. 9 illustrates a specific example diagram of a data configuration method for an IoT base station according to another embodiment of the present disclosure.

In an embodiment of the present disclosure, with reference to FIG. 9, an intelligent terminal (PDA) approaches a base station, reads base station identity information and performs confirmation, and obtains public key information of the base station from a server, which returns the public key information to the intelligent terminal. The intelligent terminal reads base station status information. After the base station returns encrypted base station status information to the intelligent terminal, the intelligent terminal decrypts the received base station status information to obtain the current status of the base station.

In an embodiment of the present disclosure, the step where sending, by the controller if decryption fails, the IoT base station status identifier indicating decryption failure to the electronic tag, and sending, by the electronic tag, the IoT base station status identifier indicating decryption failure to the intelligent terminal includes:
screening out, by the controller if decryption fails, a corresponding decryption failure processing strategy from the memory according to the IoT base station status identifier indicating decryption failure, and sending, by the controller, the IoT base station status identifier indicating decryption failure and the corresponding decryption failure processing strategy to the electronic tag; sending, by the electronic tag, the IoT base station status identifier indicating decryption failure and the corresponding decryption failure processing strategy to the intelligent terminal, and the decryption failure processing strategy corresponding to the IoT base station status identifier indicating decryption failure is stored in the memory.

The step where refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory and sending an IoT base station status identifier indicating abnormal session to the electronic tag, and sending, by the electronic tag, the IoT base station status identifier indicating abnormal session to the intelligent terminal includes:
refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory; screening out, by the controller, a corresponding abnormal session processing strategy from the memory according to the IoT base station status identifier indicating abnormal session; sending, by the controller, the IoT base station status identifier indicating abnormal session and the corresponding abnormal session processing strategy to the electronic tag; and sending, by the electronic tag, the IoT base station status identifier indicating abnormal session and the corresponding abnormal session processing strategy to the intelligent terminal; and the abnormal session processing strategy corresponding to the IoT base station status identifier indicating abnormal session is stored in the memory.

During implementation, when the IoT base station fails to go online and fault diagnosis thereof is required, base station status identifier information stored in the electronic tag (NFC Tag) of the base station can be read by the intelligent terminal (PDA) to analyze fault causes. The reading operation is not affected even if the base station fails to power on due to various reasons. Maintenance becomes more convenient compared with the solutions in the prior art that require powering on the base station and analyzing faults by checking systems or logs via commands.

In an embodiment of the present disclosure, PDA software supports manual configuration entry to handle scenarios where the background server malfunctions or relevant configuration data is not entered. The PDA software further supports pre-download of configurations. Accordingly, base station configuration update can be implemented without server connection, so as to address on-site server connection failures. The PDA software may read configuration data from another base station and then write the data into a new base station. Meanwhile, the original web-based configuration function is retained for occasions where no PDA device is available.

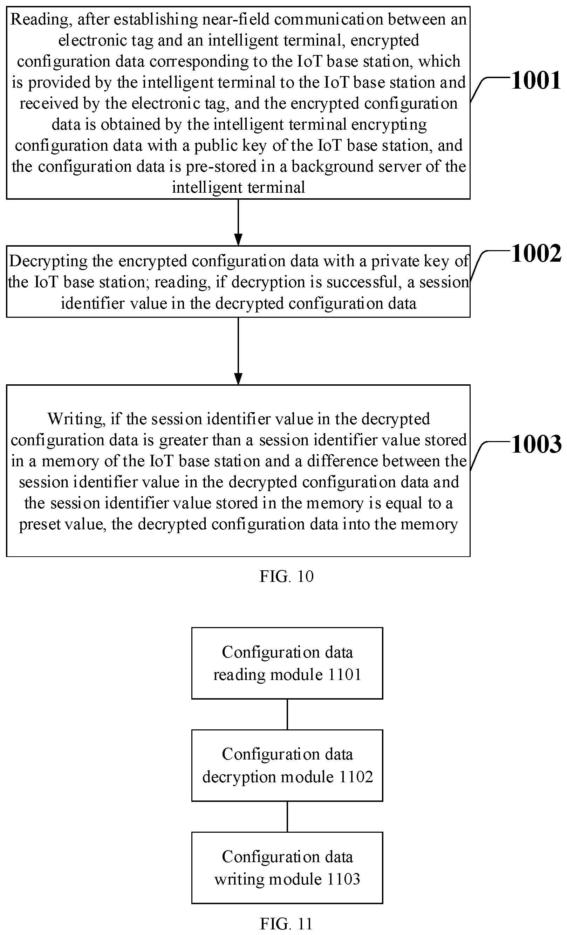

FIG. 10 illustrates a flowchart of a configuration data processing method according to an embodiment of the present disclosure.

As illustrated in FIG. 10, the configuration data processing method is applied to a controller of an IoT base station and includes the following steps.
Step 1001: reading, after establishing near-field communication between an electronic tag and an intelligent terminal, encrypted configuration data corresponding to the IoT base station, which is provided by the intelligent terminal to the IoT base station and received by the electronic tag, and the encrypted configuration data is obtained by the intelligent terminal encrypting configuration data with a public key of the IoT base station, and the configuration data is pre-stored in a background server of the intelligent terminal;
Step 1002: decrypting the encrypted configuration data with a private key of the IoT base station; reading, if decryption is successful, a session identifier value in the decrypted configuration data; and
Step 1003: writing, if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

In an embodiment of the present disclosure, the step where writing, if the session identifier value in the decrypted configuration data is greater than the session identifier value stored in a memory of the IoT base station and a difference between the session identifier value in the decrypted configuration data and the session identifier value stored in the memory is equal to a preset value, the decrypted configuration data into the memory includes:
writing, if the session identifier value in the decrypted configuration data is greater than the session identifier value stored in the memory of the IoT base station and the difference between the session identifier value in the decrypted configuration data and the session identifier value stored in the memory is equal to the preset value, upon detecting a write configuration data instruction in the decrypted configuration data, the decrypted configuration data into the memory, updating the session identifier value stored in the memory to the session identifier value in the decrypted configuration data, and sending a session identifier value update message to the background server of the intelligent terminal.

In an embodiment of the present disclosure, the step where reading, if decryption is successful, the session identifier value in the decrypted configuration data further includes: sending, if decryption fails, an IoT base station status identifier indicating decryption failure to the electronic tag.

The step where writing, if the session identifier value in the decrypted configuration data is greater than the session identifier value stored in a memory of the IoT base station and a difference between the session identifier value in the decrypted configuration data and the session identifier value stored in the memory is equal to a preset value, the decrypted configuration data into the memory includes: refusing, if the session identifier value in the refusing configuration data is less than or equal to that stored in the memory or the difference between the session identifier value in the decrypted configuration data and the session identifier value stored in the memory is not equal to the preset value, to write the decrypted configuration data into the memory and sending an IoT base station status identifier indicating abnormal session to the electronic tag.

In an embodiment of the present disclosure, after writing the decrypted configuration data into the memory, the method further includes: sending an IoT base station status identifier indicating successful configuration to the electronic tag, and sending, by the electronic tag, the IoT base station status identifier indicating successful configuration to the intelligent terminal.

In an embodiment of the present disclosure, the step where sending, if decryption fails, an IoT base station status identifier indicating decryption failure to the electronic tag, and sending, by the electronic tag, the IoT base station status identifier indicating decryption failure to the intelligent terminal includes:
screening out, if decryption fails, a corresponding decryption failure processing strategy from the memory according to the IoT base station status identifier indicating decryption failure, sending the IoT base station status identifier indicating decryption failure and the corresponding decryption failure processing strategy to the electronic tag, sending, by the electronic tag, the IoT base station status identifier indicating decryption failure and the corresponding decryption failure processing strategy to the intelligent terminal, and the decryption failure processing strategy corresponding to the IoT base station status identifier indicating decryption failure is stored in the memory.
the step where refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory and sending an IoT base station status identifier indicating abnormal session to the electronic tag, and sending, by the electronic tag, the IoT base station status identifier indicating abnormal session to the intelligent terminal includes:
refusing, if the session identifier value in the decrypted configuration data is less than or equal to the session identifier value stored in the memory and the difference between the session identifier value in the decrypted configuration data and the session identifier value stored in the memory is not equal to the preset value, to write the decrypted configuration data into the memory, screening out a corresponding abnormal session processing strategy from the memory according to the IoT base station status identifier indicating abnormal session, and sending the IoT base station status identifier indicating abnormal session and the corresponding abnormal session processing strategy to the electronic tag, sending, by the electronic tag, the IoT base station status identifier indicating abnormal session and the corresponding abnormal session processing strategy to the intelligent terminal, and the abnormal session processing strategy corresponding to the IoT base station status identifier indicating abnormal session is stored in the memory.

It should be noted that although the operations of the method of the present disclosure are described in a specific sequence in the foregoing embodiments and drawings, such description neither requires nor implies that these operations must be performed in the specific sequence, or that all illustrated operations have to be executed to attain the intended results. Additionally or alternatively, certain steps may be omitted, a plurality of steps may be combined into a single step for execution, and/or a single step may be split into a plurality of steps for execution.

The implementation of a configuration data processing apparatus may refer to the foregoing method embodiments, and duplicate content will not be repeated herein. As used below, the term "module" or "unit" may be a combination of software and/or hardware for realizing predetermined functions. Although the apparatus described in the following embodiments is exemplarily implemented by software, implementation via hardware or a combination of software and hardware is also possible and contemplated.

Based on the same inventive concept, the present disclosure further provides a configuration data processing apparatus. As illustrated in FIG. 11, the apparatus is applied to a controller of an IoT base station and includes:
a configuration data reading module 1101 configured to read, after near-field communication is established between an electronic tag and an intelligent terminal, encrypted configuration data corresponding to the IoT base station, which is provided by the intelligent terminal to the IoT base station and received by the electronic tag; wherein the encrypted configuration data is obtained by the intelligent terminal encrypting configuration data with a public key of the IoT base station, and the configuration data is pre-stored in a background server of the intelligent terminal;
a configuration data decryption module 1102 configured to decrypt the encrypted configuration data with a private key of the IoT base station and, read, if decryption is successful a session identifier value in the decrypted configuration data; and
a configuration data writing module 1103 configured to write, if the session identifier value in the write configuration data is greater than a session identifier value stored in a memory of the IoT base station and a difference between the session identifier value in the decrypted configuration data and the session identifier value stored in the memory is equal to a preset value, the decrypted configuration data into the memory.

In an embodiment of the present disclosure, the configuration data decryption module 1102 is specifically configured to:
write, if the session identifier value in the decrypted configuration data is greater than the session identifier value stored in the memory of the IoT base station and the difference between the session identifier value in the decrypted configuration data and the session identifier value stored in the memory is equal to the preset value, upon detecting a write configuration data instruction in the decrypted configuration data, the decrypted configuration data into the memory, update the session identifier value stored in the memory to the session identifier value in the decrypted configuration data, and sends a session identifier value update message to the background server of the intelligent terminal.

In an embodiment of the present disclosure, the configuration data decryption module 1102 is further configured to:
send, if decryption fails, an IoT base station status identifier indicating decryption failure to the electronic tag, and send, by the electronic tag, the IoT base station status identifier indicating decryption failure to the intelligent terminal.

The configuration data writing module 1103 is further configured to:
refuse, if the session identifier value in the decrypted configuration data is less than or equal to the session identifier value stored in the memory and the difference between the session identifier value in the decrypted configuration data and the session identifier value stored in the memory is not equal to the preset value, to write the encrypted configuration data into the memory and send an IoT base station status identifier indicating abnormal session to the electronic tag, and send, by the electronic tag, the IoT base station status identifier indicating abnormal session to the intelligent terminal.

The configuration data writing module 1103 is further configured to:
send, after writing the decrypted configuration data into the memory of the IoT base station, an IoT base station status identifier indicating successful configuration to the intelligent terminal.

In an embodiment of the present disclosure, the configuration data writing module 1103 is further configured to:
send, after writing the decrypted configuration data into the memory, an IoT base station status identifier indicating successful configuration to the electronic tag, and sending, by the electronic tag, the IoT base station status identifier indicating successful configuration to the intelligent terminal.

In an embodiment of the present disclosure, the configuration data decryption module 1102 is further specifically configured to:
screen out, if decryption fails, a corresponding decryption failure processing strategy from the memory according to the IoT base station status identifier indicating decryption failure, and send the IoT base station status identifier indicating decryption failure and the corresponding decryption failure processing strategy to the electronic tag, and send, by the electronic tag, the IoT base station status identifier indicating decryption failure and the corresponding decryption failure processing strategy to the intelligent terminal; and the decryption failure processing strategy corresponding to the IoT base station status identifier indicating decryption failure is stored in the memory.

The configuration data writing module 1103 is further specifically configured to:
refuse, if the session identifier value in the decrypted configuration data is less than or equal to the session identifier value stored in the memory and the difference between the session identifier value in the decrypted configuration data and the session identifier value stored in the memory is not equal to the preset value, to write the decrypted configuration data into the memory, screen out a corresponding abnormal session processing strategy from the memory according to the IoT base station status identifier indicating abnormal session, and send the IoT base station status identifier indicating abnormal session and the corresponding abnormal session processing strategy to the electronic tag, and send, by the electronic tag, the IoT base station status identifier indicating abnormal session and the corresponding abnormal session processing strategy to the intelligent terminal; and the abnormal session processing strategy corresponding to the IoT base station status identifier indicating abnormal session is stored in the memory.

It should be noted that although a plurality of modules of the configuration data processing apparatus have been mentioned in the above detailed description, such division is merely exemplary and not mandatory. In fact, in accordance with the embodiments of the present disclosure, the features and functions of two or more modules described above may be embodied in a single module. Conversely, the features and functions of a single module described above may be further divided to be embodied by a plurality of modules.

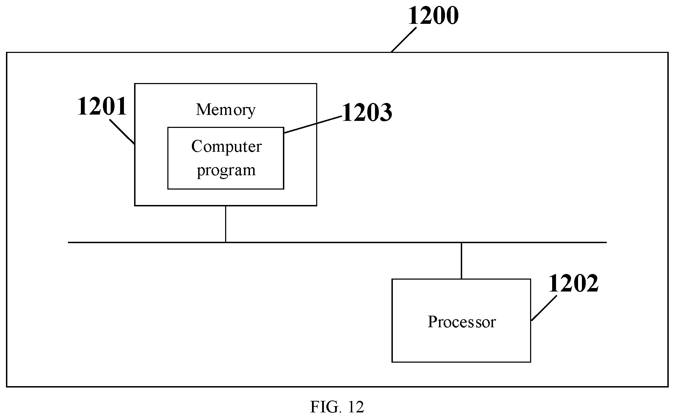

Based on the foregoing inventive concept, as illustrated in FIG. 12, the present disclosure further provides a computer device 1200, including a memory 1201, a processor 1202, and a computer program 1203 stored in the memory 1201 and executable on the processor 1202, and when executing the computer program 1203, the processor 1202 implements the foregoing configuration data processing method.

Based on the foregoing inventive concept, the present disclosure provides a computer-readable storage medium, and the computer-readable storage medium stores a computer program which, when executed by a processor, implements the foregoing configuration data processing method.

Based on the foregoing inventive concept, the present disclosure provides a computer program product, including a computer program which, when executed by a processor, implements the foregoing configuration data processing method.

The IoT base station and the data configuration method for the same according to the embodiments of the present disclosure solve the problems of low configuration efficiency of data configuration and poor security thereof caused by on-site direct configuration performed by configuration personnel. The embodiments of the present disclosure include an electronic tag, a controller and a memory. The electronic tag is configured to, after establishing near-field communication with an intelligent terminal, receive encrypted configuration data corresponding to the IoT base station and provided by the intelligent terminal to the IoT base station; the encrypted configuration data is obtained by the intelligent terminal encrypting configuration data with a public key of the IoT base station, and the configuration data is pre-stored in a background server of the intelligent terminal. The controller is configured to read the encrypted configuration data received by the electronic tag, and decrypt the encrypted configuration data with a private key of the IoT base station; if decryption is successful, the controller reads a session identifier value in the decrypted configuration data; if the session identifier value in the decrypted configuration data is greater than a session identifier value stored in the memory and a difference between the session identifier value in the decrypted configuration data and the session identifier value stored in the memory is equal to a preset value, the controller writes the decrypted configuration data into the memory. The memory is configured to store the session identifier value and the decrypted configuration data. In the embodiments of the present disclosure, the electronic tag establishes near-field communication with the intelligent terminal, and configuration data is pre-stored in the background server of the intelligent terminal. The configuration personnel are not required to possess relevant technical capabilities, which lowers the threshold for data configuration and improves the efficiency thereof. The encrypted transmission of the configuration data enhances the security of the configuration data, and the validity of the configuration data can be verified by comparing the session identifier values to avoid erroneous configuration.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present invention can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, apparatus (system) and computer program product according to the embodiments of the present disclosure. It should be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The above specific embodiments further make detailed explanations to the objectives, technical solutions and advantageous effects of the present disclosure. It should be understood that those described above are only specific embodiments of the present disclosure and are not intended to limit the protection scope of the present disclosure. Any modification, equivalent substitution or improvement made within the spirit and principle of the present disclosure should fall within the protection scope of the present disclosure.

## Claims

1. An Internet of Things (IoT) base station, comprising:
an electronic tag, a controller and a memory;
the electronic tag is configured to, after establishing near-field communication with an intelligent terminal, receive encrypted configuration data corresponding to the IoT base station and provided by the intelligent terminal to the IoT base station; wherein the encrypted configuration data is obtained by the intelligent terminal encrypting configuration data with a public key of the IoT base station, and the configuration data is pre-stored in a background server of the intelligent terminal;
the controller is configured to read the encrypted configuration data received by the electronic tag, and decrypt the encrypted configuration data with a private key of the IoT base station; if decryption is successful, read a session identifier value in the decrypted configuration data; and if the session identifier value in the decrypted configuration data is greater than a session identifier value stored in the memory and a difference between the session identifier value in the decrypted configuration data and the session identifier value stored in the memory is equal to a preset value, write the decrypted configuration data into the memory; and
the memory is configured to store the session identifier value and the decrypted configuration data.

2. The IoT base station according to claim 1, wherein the electronic tag is further configured to:
send an IoT base station identifier to the intelligent terminal; wherein the IoT base station identifier is used to enable the intelligent terminal to determine the IoT base station requiring the configuration data.

3. The IoT base station according to claim 1, wherein the controller is configured to:
if the session identifier value in the decrypted configuration data is greater than the session identifier value stored in the memory and the difference between the session identifier value in the decrypted configuration data and the session identifier value stored in the memory is equal to the preset value, upon detecting a write configuration data instruction in the decrypted configuration data, write the decrypted configuration data into the memory, update the session identifier value stored in the memory to the session identifier value in the decrypted configuration data, and send a session identifier value update message to the background server of the intelligent terminal.

4. The IoT base station according to claim 1, wherein the controller is further configured to:
if decryption fails, send an IoT base station status identifier indicating decryption failure to the electronic tag;
if the session identifier value in the decrypted configuration data is less than or equal to the session identifier value stored in the memory or the difference between the session identifier value in the decrypted configuration data and the session identifier value stored in the memory is not equal to the preset value, refuse to write the decrypted configuration data into the memory and send an IoT base station status identifier indicating abnormal session to the electronic tag; and
the electronic tag is further configured to send the IoT base station status identifier indicating decryption failure or the IoT base station status identifier indicating abnormal session to the intelligent terminal.

5. The IoT base station according to claim 1, wherein the controller is further configured to:
after writing the decrypted configuration data into the memory, send an IoT base station status identifier indicating successful configuration to the electronic tag; and
the electronic tag is further configured to send the IoT base station status identifier indicating successful configuration to the intelligent terminal.

6. The IoT base station according to claim 4, wherein the controller is further configured to:
if decryption fails, screen out a corresponding decryption failure processing strategy from the memory according to the IoT base station status identifier indicating decryption failure, and send the IoT base station status identifier indicating decryption failure and the corresponding decryption failure processing strategy to the electronic tag; and
if the session identifier value in the decrypted configuration data is less than or equal to the session identifier stored in the memory or the difference between the session identifier value in the decrypted configuration data and the session identifier value stored in the memory is not equal to the preset value, refuse to write the decrypted configuration data into the memory, screen out a corresponding abnormal session processing strategy from the memory according to the IoT base station status identifier indicating abnormal session, and send the IoT base station status identifier indicating abnormal session and the corresponding abnormal session processing strategy to the electronic tag;
the electronic tag is further configured to send the IoT base station status identifier indicating decryption failure and the corresponding decryption failure processing strategy to the intelligent terminal, or send the IoT base station status identifier indicating abnormal session and the corresponding abnormal session processing strategy to the intelligent terminal; and
the memory is further configured to store the decryption failure processing strategy corresponding to the IoT base station status identifier indicating decryption failure and the abnormal session processing strategy corresponding to the IoT base station status identifier indicating abnormal session.

7. A data configuration method for the IoT base station according to any one of claims 1 to 6, comprising:
receiving, by an electronic tag of the IoT base station after the electronic tag establishes near-field communication with an intelligent terminal, encrypted configuration data corresponding to the IoT base station and provided by the intelligent terminal to the IoT base station; wherein the encrypted configuration data is obtained by the intelligent terminal encrypting configuration data with a public key of the IoT base station, and the configuration data is pre-stored in a background server of the intelligent terminal; and
reading, by a controller of the IoT base station, the encrypted configuration data received by the electronic tag, and decrypting the encrypted configuration data with a private key of the IoT base station; reading, by the controller if decryption is successful, a session identifier value in the decrypted configuration data; and writing, by the controller if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

8. The method according to claim 7, wherein after the electronic tag establishes near-field communication between the electronic tag and the intelligent terminal, the method further comprises:
sending, by the electronic tag, an IoT base station identifier to the intelligent terminal; wherein the IoT base station identifier is used to enable the intelligent terminal to determine the IoT base station requiring the configuration data.

9. The method according to claim 7, wherein the step where writing, by the controller if the session identifier value in the decrypted configuration data is greater than the session identifier value stored in the memory of the IoT base station and the difference between the session identifier value in the decrypted configuration data and the session identifier value stored in the memory is equal to the preset value, the decrypted configuration data into the memory comprises:
writing, by the controller if the session identifier value in the decrypted configuration data is greater than the session identifier value stored in the memory of the IoT base station and the difference between the session identifier value in the decrypted configuration data and the session identifier value stored in the memory is equal to the preset value, upon detecting a write configuration data instruction in the decrypted configuration data, the decrypted configuration data into the memory, updating the session identifier value stored in the memory to the session identifier value in the decrypted configuration data, and sending a session identifier value update message to the background server of the intelligent terminal.

10. The method according to claim 7, further comprising:
sending, by the controller if decryption fails, an IoT base station status identifier indicating decryption failure to the electronic tag, and sending, by the electronic tag, the IoT base station status identifier indicating decryption failure to the intelligent terminal; and
the step where writing, by the controller if the session identifier value in the decrypted configuration data is greater than the session identifier value stored in the memory of the IoT base station and the difference between the session identifier value in the decrypted configuration data and the session identifier value stored in the memory is equal to the preset value, the decrypted configuration data into the memory comprises:
refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory and sending an IoT base station status identifier indicating abnormal session to the electronic tag, and sending, by the electronic tag, the IoT base station status identifier indicating abnormal session to the intelligent terminal.

11. The method according to claim 7, wherein after the writing, by the controller, the decrypted configuration data into the memory, the method further comprises:
sending, by the controller, an IoT base station status identifier indicating successful configuration to the electronic tag; and
sending, by the electronic tag, the IoT base station status identifier indicating successful configuration to the intelligent terminal.

12. The method according to claim 10, wherein the step where sending, by the controller if decryption fails, the IoT base station status identifier indicating decryption failure to the electronic tag, and sending, by the electronic tag, the IoT base station status identifier indicating decryption failure to the intelligent terminal comprises:
screening out, by the controller if decryption fails, a corresponding decryption failure processing strategy from the memory according to the IoT base station status identifier indicating decryption failure, sending, by the controller, the IoT base station status identifier indicating decryption failure and the corresponding decryption failure processing strategy to the electronic tag, and sending, by the electronic tag, the IoT base station status identifier indicating decryption failure and the corresponding decryption failure processing strategy to the intelligent terminal, wherein the decryption failure processing strategy corresponding to the IoT base station status identifier indicating decryption failure is stored in the memory; and
the step where refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory and sending an IoT base station status identifier indicating abnormal session to the electronic tag, and sending, by the electronic tag, the IoT base station status identifier indicating abnormal session to the intelligent terminal comprises:
refusing, by the controller if the session identifier value in the decrypted configuration data is less than or equal to the session identifier value stored in the memory or the difference between the session identifier value in the decrypted configuration data and the session identifier value stored in the memory is not equal to the preset value, to write the decrypted configuration data into the memory; screening out, by the controller, a corresponding abnormal session processing strategy from the memory according to the IoT base station status identifier indicating abnormal session; sending, by the controller, the IoT base station status identifier indicating abnormal session and the corresponding abnormal session processing strategy to the electronic tag; and sending, by the electronic tag, the IoT base station status identifier indicating abnormal session and the corresponding abnormal session processing strategy to the intelligent terminal; wherein the abnormal session processing strategy corresponding to the IoT base station status identifier indicating abnormal session is stored in the memory.

13. A configuration data processing method, which is applied to the controller of the IoT base station according to any one of claims 1 to 6, comprising:
reading, after establishing near-field communication between an electronic tag and an intelligent terminal, encrypted configuration data corresponding to the IoT base station, which is provided by the intelligent terminal to the IoT base station and received by the electronic tag, wherein the encrypted configuration data is obtained by the intelligent terminal encrypting configuration data with a public key of the IoT base station, and the configuration data is pre-stored in a background server of the intelligent terminal;
decrypting the encrypted configuration data with a private key of the IoT base station; reading, if decryption is successful, a session identifier value in the decrypted configuration data; and
writing, if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

14. A configuration data processing apparatus, which is applied to the controller of the IoT base station according to any one of claims 1 to 6, comprising:
a configuration data reading module configured to read, after near-field communication is established between an electronic tag and an intelligent terminal, encrypted configuration data corresponding to the IoT base station, which is provided by the intelligent terminal to the IoT base station and received by the electronic tag; wherein the encrypted configuration data is obtained by the intelligent terminal encrypting configuration data with a public key of the IoT base station, and the configuration data is pre-stored in a background server of the intelligent terminal;
a configuration data decryption module configured to decrypt the encrypted configuration data with a private key of the IoT base station and, read, if decryption is successful, a session identifier value in the decrypted configuration data; and
a configuration data writing module configured to write, if the session identifier value in the decrypted configuration data is greater than a session identifier value stored in a memory of the IoT base station and a difference between the session identifier value in the decrypted configuration data and the session identifier value stored in the memory is equal to a preset value, the decrypted configuration data into the memory.

15. A computer device, comprising a memory, a processor and a computer program stored in the memory and executable on the processor, wherein when executing the computer program, the processor implements the method according to claim 13.

16. A computer-readable storage medium, wherein the computer-readable storage medium stores a computer program which, when executed by a processor, implements the method according to claim 13.

17. A computer program product, wherein the computer program product comprises a computer program which, when executed by a processor, implements the method according to claim 13.
